# EUROPEAN PATENT SPECIFICATION

(11) **EP 2 101 076 B1**
(45) Date of publication and mention of the grant of the patent: **03.08.2011**
(21) Application number: 09250592.4
(22) Date of filing: 02.03.2009
(51) Int. Cl.: F16D 65/12, F16D 65/00

(54) **Brake disk and vehicle**
Bremsscheibe und Fahrzeug
Disque de frein et véhicule

(30) Priority: 12.03.2008 JP 2008062106
(43) Date of publication of application: 16.09.2009
(73) Proprietor: Yamaha Hatsudoki Kabushiki Kaisha, Shizuoka-ken Shizuoka 438-8501 (JP)
(72) Inventor: Hombo, Yoshihisa, Iwata-shi Shizuoka-ken 438-8501 (JP)
(74) Representative: Schoppe, Fritz

(56) References cited:
- EP-A- 1 677 024
- DE-A1- 1 530 246
- DE-A1-102004 002 710
- JP-A- 2005 315 351

## Description

### Technical Field

The present invention relates to a brake disk and a so-called floating type brake disk in which a hub and a ring-shaped member are coupled to each other while keeping a gap between them.

### Background Art

In some cases in recent years, a so-called floating type brake disk is employed as a brake disk used for a braking device of a motorcycle and the like. The floating type brake disk is constructed of separate parts of a ring-shaped braking member having a pad pressed thereon and a hub arranged coaxially inside the braking member. The braking member and the hub are coupled to each other, for example, by caulking pins fitted in pin holes with a play, the pin holes being formed in portions where the braking member and the hub are opposite to each other. In this floating type brake disk, a gap is held between the braking member and the hub, and the strain produced in the braking member by thermal expansion at the time of braking can be absorbed by the gap, which hence can prevent partial wear of a sliding portion and a decrease in a braking force. This floating type brake disk is disclosed in, for example, Japanese Unexamined Patent Publication No. 2005-315351.

The patent document discloses a floating type brake disk having a truss constructed between a coupling portion for coupling a braking member to a hub and a fixing portion for fixing the hub to a rotary body (axle or the like), the truss being broadened from a coupling portion side to a fixing portion side. This brake disk has its rigidity ensured by constructing the truss broadened from the coupling portion side to the fixing portion side.

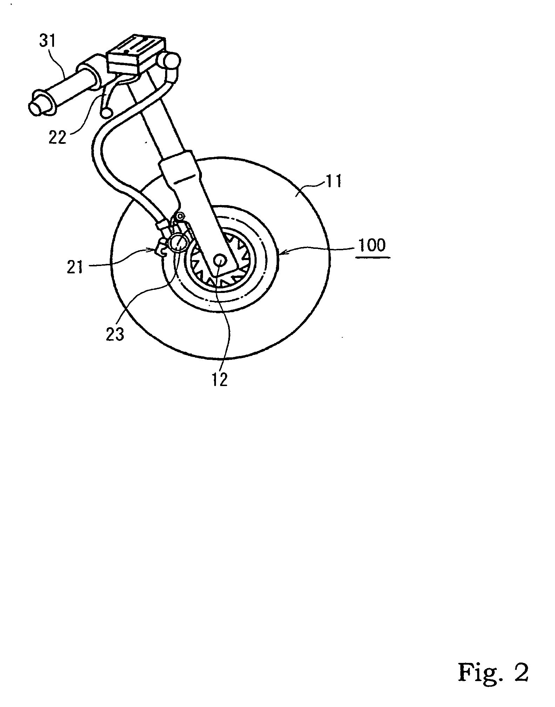

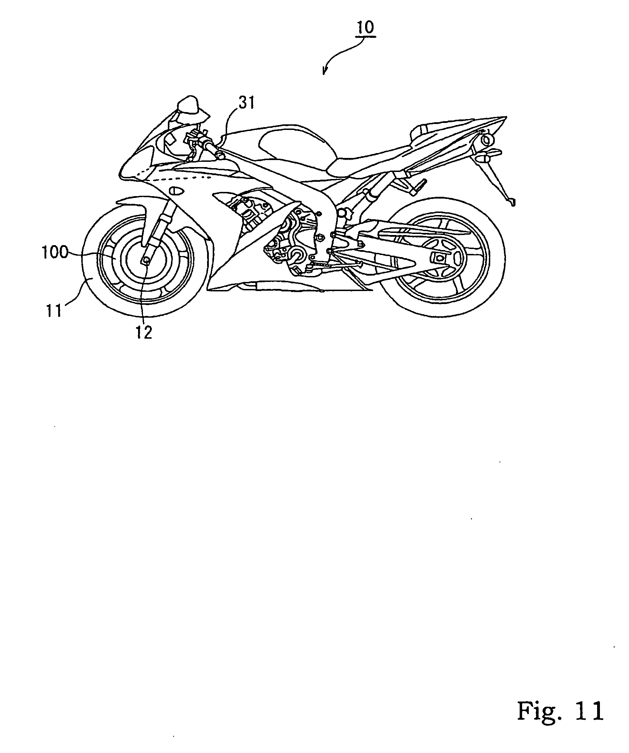

By the way, in the engine control device of a motorcycle, vibration is caused by a braking mechanism or its surroundings at the time of braking. This vibration is also called brake judder. The vibration is transmitted to a rider via a handlebar 31 and a brake lever 22 (see Fig. 2 and Fig. 11). To improve the riding comfort that a rider feels at the time of driving a vehicle, it is desired to reduce this vibration. However, the brake disk described in the patent document 1 presents a problem that because the rigidity of the brake disk is high, vibration is easily caused at the time of braking.

### Summary

A brake disk according to the present invention includes: a hub; a ring-shaped braking member arranged outside the hub via a gap; and a plurality of coupling members for coupling the hub to the braking member while keeping the gap. The hub has a plurality of coupling portions disposed at a plurality of positions in a peripheral direction of an outer edge portion, the plurality of coupling portions being coupled to the braking member by the plurality of coupling members. Moreover, the plurality of coupling portions are coupled to a central portion disposed inside in the radial direction of the coupling portions by arm portions , cf. JP-A-2005-315351, wherein the invention differs from that prior art in that the arm portions are inclined in the same peripheral direction with respect to the radial direction.

According to this brake disk, the hub and the braking member are coupled to each other while keeping a gap, so that the hub little undergoes the effect of thermal strain caused in the braking member at the time of braking. In addition, the central portion of the hub and a plurality of coupling portions are coupled to each other by the plurality of arm portions inclined in the same peripheral direction with respect to the radial direction. For this reason, the plurality of arm portions that keep specified rigidity and which are inclined in the one rotational direction with respect to the radial direction are allowed to be elastically inclined at the time of braking. Thus, the plurality of arm portions can reduce vibration caused by the braking mechanism or its surroundings.

### Brief Description of the Drawings

Embodiments of the invention are described hereinafter, by way of example only, with reference to the accompanying drawings.
Fig. 1 is a plan view to show a brake disk according to one embodiment of the present invention
Fig. 2 is a side view to show a state in which the brake disk according to the one embodiment of the present invention is used
Fig. 3 is a plan view to show a coupling portion of a hub and a braking member
Fig. 4 is a section view to show a coupling structure of the hub and the braking member
Fig. 5 is a section view to show the coupling structure of the hub and the braking member
Fig. 6 is a plan view to schematically show a brake disk according to the one embodiment of the present invention
Fig. 7 is a plan view to schematically show a force applied to coupling portions of the hub and braking member
Fig. 8 is a plan view to show a state at the time of braking of the coupling portions of the hub and the braking member
Fig. 9 is a plan view to show a brake disk according to another embodiment of the present invention
Fig. 10 is a plan view to show a brake disk according to still another embodiment of the present invention
Fig. 11 is a side view of a motorcycle fitted with a brake disk

### Best Mode for Carrying Out the Invention

Hereinafter, a brake disk according to one embodiment of the present invention will be described with reference to the accompanying drawings. Here, in the respective drawings, the members and parts to produce the same operations are denoted by the same reference numerals. Moreover, in the respective drawings, the members and parts are shown on the assumption that they are viewed from the directions of the reference numerals.

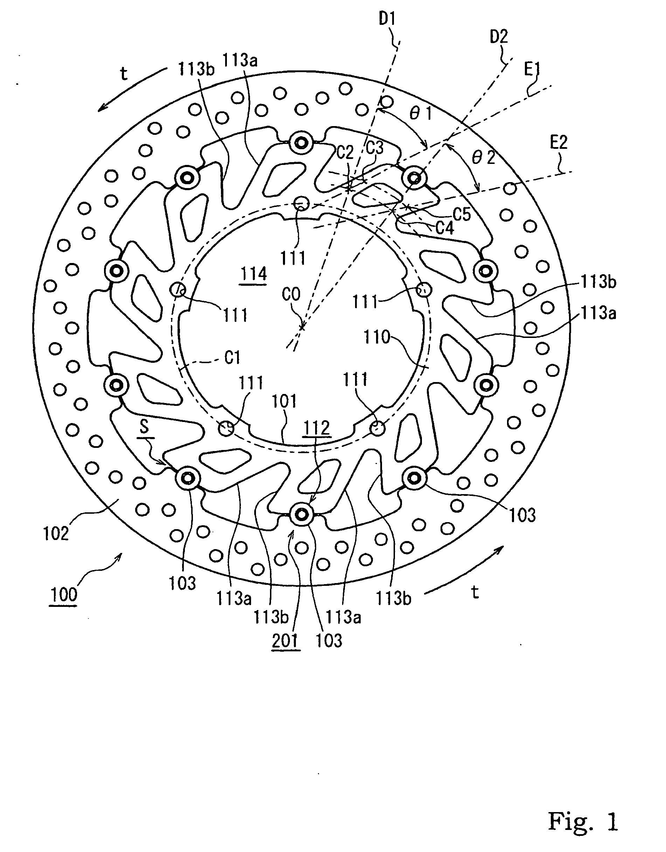

A brake disk 100, as shown in Fig. 1, is provided with a hub 101, a braking member 102, and coupling members 103. This brake disk 100, for example, as shown in Fig. 11, can be applied to a brake disk of a front wheel 11 of a motorcycle 10. Describing in more detail, the brake disk 100, as shown in Fig. 2, is coaxially fixed to an axle 12 of the wheel 11 and is rotated together with the wheel 11. The brake disk 100 is fixed to one side or both sides of the wheel 11, depending on the kind of the vehicle. In the example shown in Fig. 2, the motorcycle is provided with a brake mechanism 21 such as a caliper operated by a brake lever 22. The brake mechanism 21 sandwiches the brake disk 100 by a pair of brake shoes 23 to produce a braking force by a frictional force produced between the brake disk 100 and the brake shoes 23. Hereinafter, the respective parts to construct the brake disk 100 will be described.

The hub 101, in this embodiment, is a member fixed to a rotary body (wheel or the like) to be braked and is constructed of a member formed of aluminum in the shape of a circular disk so as to reduce the weight of a brake disk. The hub 101 has a central portion 110, coupling portions 112, and arm portions 113a, 113b.

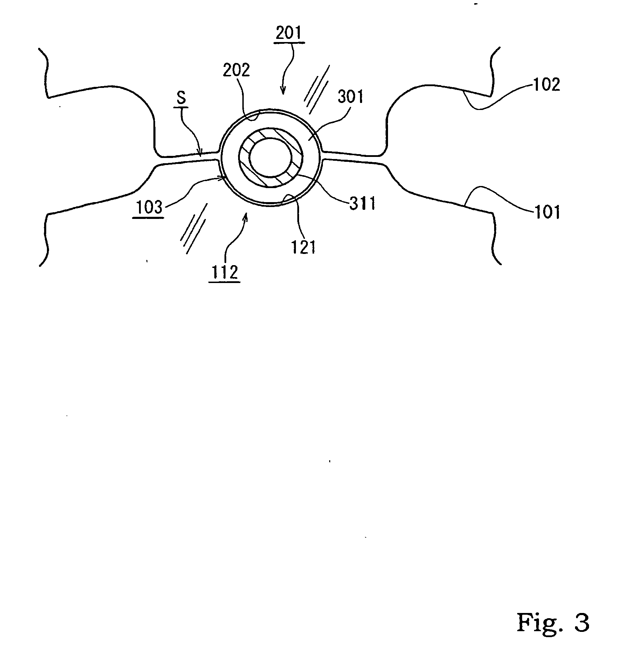

The coupling portions 112 are portions coupled to the braking member 102 by coupling members 103 and are disposed at plural positions in a peripheral direction of the outer edge portion of the hub 101. In this embodiment, the coupling portions 112 are independent from each other at the plural positions (ten positions in this embodiment) in the peripheral direction of the hub 101 and are disposed at equal intervals in the peripheral direction. In each of the coupling portions 112, as shown in Fig. 3, the outer edge portion of the hub 101 is cut out nearly in the shape of a semicircle. This cutout 121 forms a portion of a pin hole.

The central portion 110 of the hub 101 is formed inside in the radial direction of the coupling portions 112. In this embodiment, the central portion 110 has a nearly circular opening 114 formed therein, and has fixing portions 111 disposed on the periphery of the opening 114. The fixing portions 111 are portions for fixing this brake disk 100 to the other member, and in this embodiment, fix the brake disk 100 to the front wheel 11 of the rotary body to be braked. The fixing portions 111 are formed at equal intervals in the peripheral direction and each of the fixing portions 111 has a circular fixing hole formed therein. Around the fixing portions 111, for example, the inside edge portion of the hub 101 is protruded inside to widen the width of the hub 101. With this, when the hub 101 is fixed for use to the rotary body to be braked, the concentration of stress applied to the periphery of the fixing portion 111 is relieved.

The coupling portions 112 and the central portion 110 described above, as shown in Fig. 1, are coupled to each other by the arm portions 113a, 113b. These arm portions 113a, 113b are inclined in one peripheral direction with respect to a radial direction. In this embodiment, each of the coupling portions 112 is coupled to the central portion 110 by the plural arm portions 113a, 113b. Describing in more detail, the arm portions 113a, 113b are arranged respectively on both side in the peripheral direction of the coupling portion 112 so as to sandwich the coupling member 103. In this embodiment, the arm portions 113a, 113b are arranged at equal intervals in the peripheral direction.

In this regard, it is recommended to specify the radial direction by the direction of a straight line passing the center C0 at which the hub 101 is fixed to the wheel 11. In this embodiment, the center C0 of the hub 101 is specified, for example, by the center of a circle C1 passing the centers of the fixing holes formed in the respective fixing portions 111. Moreover, it is recommended to specify the longitudinal direction E1 (E2) of the arm portion 113a (113b), for example, by the direction of a straight line that passes: a central position C2 (C4) of the width in the peripheral direction of the arm portion 113a (113b) inside in the radial direction of the arm portion 113a (113b); and a central position C3 (C5) of the width in the peripheral direction of the arm portion 113a (113b) outside in the radial direction of the arm_portion 113a (113b). It is recommended to specify the inclination θ1 (θ2) of the arm portion 113a (113b) with respect to the radial direction, for example, as shown in Fig. 1, by an angle formed by a straight line D 1 (D2) in the radial direction, which passes the center C0 of the hub 101 and the center position C2 (C4) of the width inside in the radial direction of the arm portion 113a (113b), and by the longitudinal direction E1 (E2) of the arm portions 113a (113b).

The above-mentioned fixing portions 111 are formed between the arm portions 113a, 113b disposed adjacently to each other in tandem in the peripheral direction, of the arm portions 113a, 113b extending from different coupling portions 112 disposed adjacently to each other in tandem in the peripheral direction. In this embodiment, the fixing portions 111 are formed at five positions selected at equal intervals in the peripheral direction, of the positions in which the arm portions 113a, 113b extending from the different coupling portions 112 combine with each other.

Next, the braking member 102 will be described.

The braking member 102 is a ring-shaped member and is disposed outside the hub 101 via a gap S. In this embodiment, the braking member 102, as shown in Fig. 2, is a member having the brake shoes 23 pressed thereon and is constructed of a ring-shaped flat plate. The braking member 102 is a member that has the brake shoes 23 pressed thereon and which easily produces heat by load and friction. For this reason, it is recommended to construct the braking member 102 of a plate made of metal having specified rigidity and wear resistance, for example, iron. Moreover, in this embodiment, the braking member 102 has plural holes formed therein, which hence can prevent rain water from entering between the brake shoes 23 and the braking member 102 and can exert a sufficient braking force.

In this embodiment, the braking member 102 has coupling portions 201 coupled to the hub 101 by the coupling members 103 at positions corresponding to the coupling portions 112 disposed in the outer edge of the hub 101. In the portions having the coupling portions 201 disposed therein, the inside edge portion of the braking member 102 is protruded inside. Each of the coupling portions 201, as shown in Fig. 3, has its inside edge portion cut out nearly in the shape of a semicircle. This cutout 202 and the cutout 121 formed in the coupling portion 112 on the hub 101 side form the circular pin hole in combination.

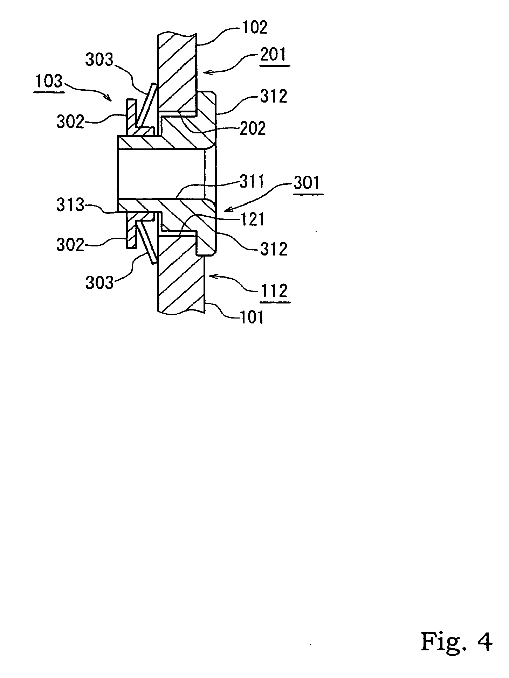

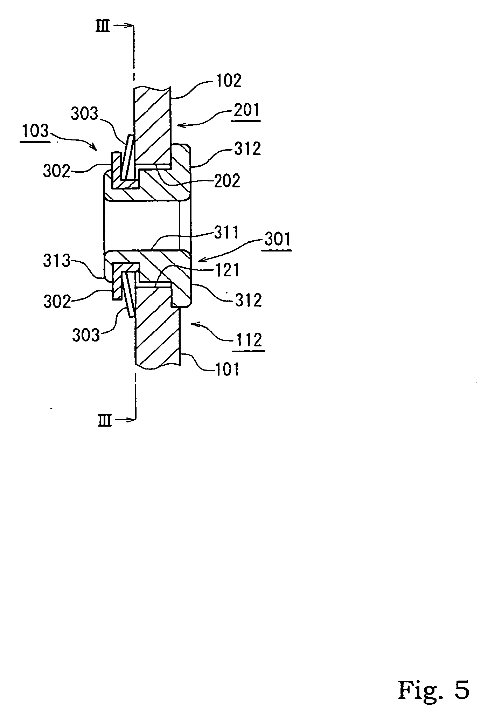

The coupling members 103 couple the hub 101 to the braking member 102 while keeping the gap S between the hub 101 and the braking member 102. In this embodiment, the coupling member 103, as shown in Fig. 4, is constructed of a caulking pin 301, a spring washer 302, and a coned disk spring 303. In this embodiment, the caulking pin 301 has a head portion 312 extending outward in the radial direction on one end of a hollow shaft portion 311. The caulking pin 301, as shown in Fig. 4, is passed through the pin hole formed by the cutouts 121, 202 formed by the coupling portions 112, 201. The other end 313 of the caulking pin 301 passed through the pin hole has the coned disk spring 303 and the spring washer 302 passes thereon in this order. Then, as shown in Fig. 5, the other end 313 of the caulking pin 301 is pressed and expanded outward, whereby the spring washer 302 is fixed in a state where the coned disk spring 303 is pressed onto the side surfaces of the hub 101 and the braking member 102.

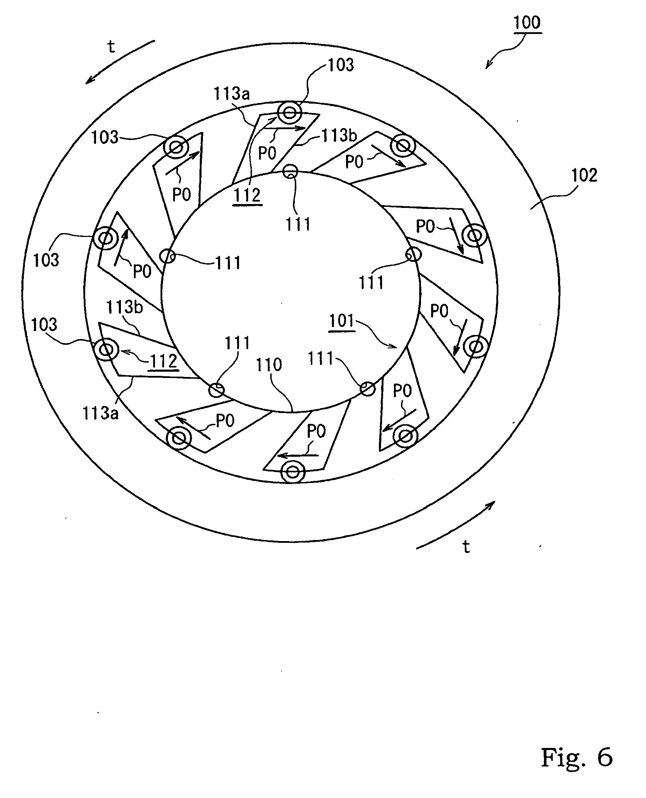

This brake disk 100, for example, as shown in Fig. 1, the arm portions 113a, 113b of the hub 101 are inclined in one peripheral direction with respect to the radial direction. When this brake disk 100 is fixed to the wheel 11, it is recommended to fix the brake disk 100 to the wheel 11 in such a way that, on the assumption that a rotational direction in which the wheel 11 is rotated when the vehicle travels forward is t, inside portions in the radial direction of the arm portions 113a, 113b of the hub 101 are positioned forward in the rotational direction t of outside portions in the radial direction. Fig. 6 schematically shows the structure of the brake disk 100.

According to this brake disk 100, the hub 101 and the braking member 102 are coupled to each other while keeping the gap S (see Fig. 3), so that the hub 101 less undergoes the effect of thermal strain produced in the braking member 102 at the time of braking. In addition, the central portion 110 of the hub 101 and the coupling portions 112 are coupled to each other by the plural arm portions 113a, 113b inclined in the one rotational direction with respect to the radial direction. For this reason, the arm portions 113a, 113b that ensure specified rigidity and which are inclined in the one rotational direction with respect to the radial direction are allowed to be elastically inclined at the time of braking, which hence can reduce vibration caused by a braking mechanism or its surroundings.

That is, this brake disk 100, as shown in 1, has the coupling members 103 for coupling the hub 101 to the braking member 102 while keeping the gap S between the hub 101 and the braking member 102 (see Fig. 3). Since the gap S is interposed between the hub 101 and the braking member 102, the hub 101 less undergoes the effect of heat produced in the braking member 102 at the time of braking. In other words, the frictional heat produced at the time of braking is not transmitted directly to the hub 101 from the braking member 102 and hence does not make as large an effect as greatly deforms the hub 101 by thermal expansion. Moreover, there is a case where the braking member 102 is expanded by the frictional heat produced at the time of braking, but the gap S is kept between the hub 101 and the braking member 102. For this reason, when the braking member 102 is thermally expanded, the braking member 102 can have its diameter expanded without being constrained by the hub 101 arranged inside. Even when the braking member 102 has its diameter expanded, the braking member 102 does not have an effect on the hub 101 arranged inside the braking member 102 via the gap S.

Further, in the outer edge portion of the hub 101, the coupling portions 112 coupled to the braking member 102 by the coupling members 103 are disposed at the plural positions in the peripheral direction,. The coupling portions 112 and the central portion of the hub 101 are coupled to each other by the plural arm portions 113a, 113b, and the plural arm portions 113a, 113b are inclined in the one peripheral direction with respect to the radial direction. For example, when the vehicle is run forward and is braked, as shown in Fig. 1, the central portion of the hub 101 fixed to the wheel 11 has a force applied thereto in the rotational direction t by the inertia force of the vehicle. On the other hand, the coupling portions 112 of the hub 101 fixed to the braking member 102 have a force applied thereto in a direction opposite to the rotational direction t by a braking force. For this reason, as shown in Fig. 6, the coupling portions 112 have a force P0 applied thereto in a tangential direction.

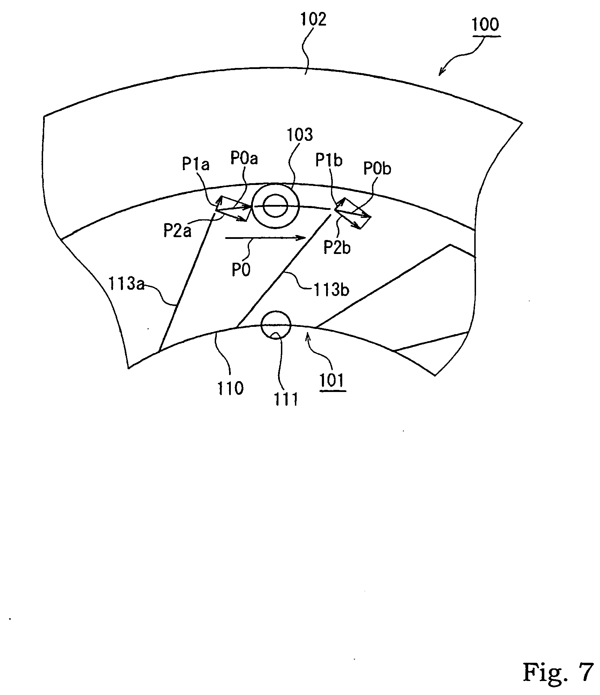

In this brake disk 100, the coupling portions 112 are coupled to the central portion 110 of the hub 101 by the plural arm portions 113a, 113b, and the plural arm portions 113a, 113b are inclined in the one peripheral direction with respect to the radial direction. At the time of braking, each of the coupling portions 112 of the hub 101, as shown in Fig. 6, has a force P0 applied thereto in the tangential direction via the coupling member 103. By the force P0 in the tangential direction, as shown in Fig. 7, forces P0a, P0b are applied in the tangential direction to the end portions outside in the radial direction of the arm portions 113a, 113b. The forces P0a, P0b applied in the tangential direction to the end portions outside in the radial direction of the arm portions 113a, 113b can be divided into forces: P1a, P1b applied in the longitudinal direction of the arm portions 113a, 113b for coupling the coupling portions 112 to the central portion 110; and P2a, P2b applied in a direction orthogonal to the longitudinal direction. The forces P1a, P1b are applied to the arm portions 113a, 113b so as to pull the arm portions 113a, 113b, whereas the forces P2a, P2b are applied to the arm portions 113a, 113b so as to bend the arm portions 113a, 113b. That is, in this brake disk 100, the arm portions 113a, 113b have the pulling forces P1a, P1b and the bending forces P2a, P2b applied thereto at the time of braking.

In this manner, in this brake disk 100, the thermal expansion developed in the braking member 102 at the time of braking has little effect on the hub 101, and the plural arm portions 113a, 113b of the hub 101 has the pulling forces P1a, P1b and the bending force P2a, P2b applied thereto. The plural arm portions 113a, 113b are inclined in the one peripheral direction with respect to the radial direction, so that at the time of braking, the arm portions 113a, 113b of the hub 101 are elastically deformed in such a way that the outside portion in the radial direction, which has the coupling portions 112 disposed therein, is inclined rearward in the rotational direction t. A portion of the force applied to the brake disk 100 at the time of braking can be absorbed by the elastic deformation of the hub 101. For this reason, vibration caused in the braking mechanism and its surroundings at the time of braking can be prevented.

Further, in this embodiment, as shown in Fig. 6, the plural arm portions 113a, 113b are inclined in the one peripheral direction with respect to the radial direction. For this reason, the arm portions 113a, 113b are longer than the distance in the radial direction between the central portion 110 of the hub 101 and the coupling portion 112. Thus, when the arm portions 113a, 113b are elastically deformed as described above, the arm portions 113a, 113b can be easily bent.

Moreover, depending on the structure and the like of the braking mechanism, there is a case where the force applied to the braking member 102 at the time of braking does not balance on the obverse and reverse surfaces of the braking member 102, thereby applying a force to the braking member 102 in a normal direction. In this case, the braking member 102 can be inclined in the normal direction. In this embodiment, the gap S is kept between the hub 101 and the braking member 102, and hence even if the braking member 102 is inclined in the normal direction, the effect that the braking member 102 produces on the hub 101 is little. With this, a force applied to the wheel 11 via the hub 101 is relieved, and hence vibration caused in the braking mechanism or its surroundings at the time of braking can be further decreased. Even if the braking member 102 is inclined in the normal direction, the braking member 102, the effect that the braking member 102 produces on the hub 101 is little, so that the rigidity required of the hub 101 does not become so high. Thus, the thickness of the hub 101 can be reduced and the weight of the brake disk 100 can be reduced.

Further, in this embodiment, the coupling portions 112 are independent of each other at plural positions in the peripheral direction of the hub 101. That is, the respective coupling portions 112 are coupled to the central portion 110 of the hub 101 by the different arm portions 113a, 113b. For this reason, the forces applied to the coupling portions 112 are applied respectively to the arm portions 113a, 113b extending to the coupling portion 112, which can elastically deform the hub 101 suitably. With this, vibration caused by the braking mechanism or its surroundings at the time of braking can be further reduced.

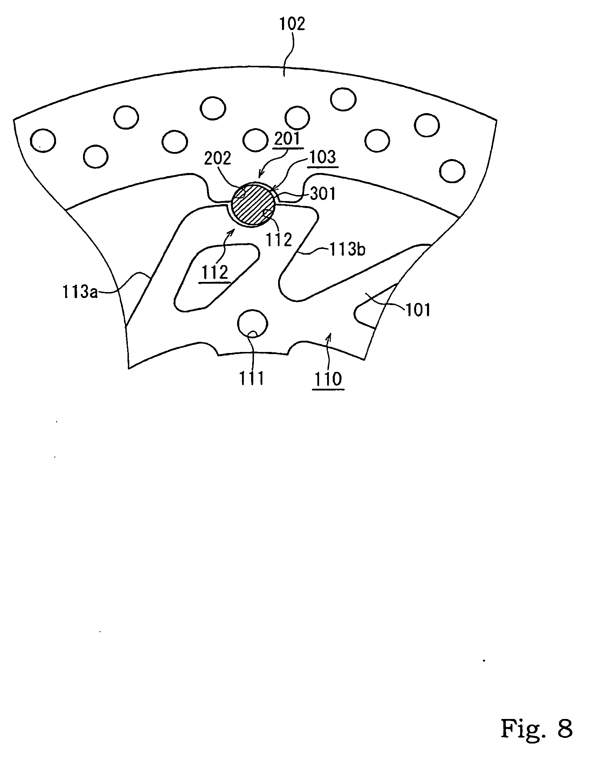

Still further, in this embodiment, the respective coupling portions 112 are coupled to the central portion 110 by the plural arm portions 113a, 113b. For this reason, the forces applied to the coupling portions 112 at the time of braking can be distributed and hence stress concentration can be relieved. Moreover, in this embodiment, the arm portions 113a, 113b are arranged on both sides in the peripheral direction of the coupling portion 112 across the coupling member 103, respectively. For this reason, the forces applied to the coupling portions 112 can be suitably distributed. With this, vibration caused by the braking mechanism or its surroundings at the time of braking can be further reduced. Further, in this embodiment, as shown in Fig. 8, each coupling portion 112 is coupled to the central portion 110 by the plural arm portions 113a, 113b. Each of the arm portions 113a, 113b is formed in a shape to allow the arm portions 113a, 113b to be elastically deformed so as to be inclined in the peripheral direction as described above. With this, the forces applied to the coupling portions 112 of the hub 101 via the coupling members 103 from the braking member 102 at the time of braking can be reduced by the elastic deformation of the arm portions 113a, 113b. Further, the deformation and impression of the cutouts 121 of the coupling portions 112 can be made smaller.

Still further, in this embodiment, the fixing portions 111 for fixing the brake disk 100 to the other member (wheel 11) are disposed in the central portion 110 of the hub 101. In this embodiment, each of the fixing portions 111 is interposed between the arm portions 113a, 113b disposed adjacently to each other in tandem in the peripheral direction, of the arm portions 113a, 113b extending from the different coupling portions 112 disposed adjacently to each other in tandem in the peripheral direction. For this reason, the forces applied to the fixing portions 111 can be distributed to the different coupling portions 112 disposed adjacently to each other in tandem in the peripheral direction. With this, the pulling forces and the bending forces applied to the arm portions 113a, 113b can be made more uniform. Thus, vibration caused by the braking mechanism or its surroundings at the time of braking can be further reduced.

Still further, in this embodiment, the coupling portions 112 and the arm portions 113a, 113b are disposed at equal intervals in the peripheral direction, so that the pulling forces and the bending forces applied to the respective arm portions 113a, 113b can be made more uniform. Still further, in the brake disk 100, the number of the arm portions 113a, 113b is increased and the arm portions 113a, 113b are arranged at equal intervals in the peripheral direction of the hub 101. With this, vibration caused by the braking mechanism or its surroundings at the time of braking can be further reduced.

Up to this point, the brake disk 100 according to the one embodiment of the present invention has been described, but the brake disk according to the present invention is not limited to the above-mentioned embodiment. Hereinafter, the other embodiments of the brake disk according to the present invention will be described.

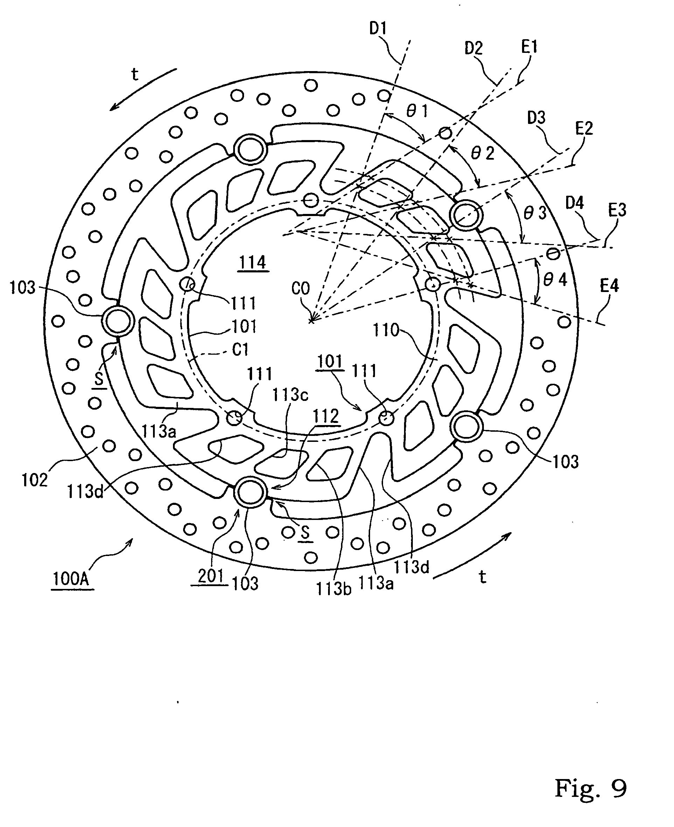

A brake disk 100A, as shown in Fig. 9, includes the hub 101; the ring-shaped braking member 102 arranged outside the hub 101 via the gap S; and the coupling members 103 for coupling the hub 101 to the braking member 102 while keeping the gap S. The coupling portions 112 coupled to the braking member 102 by the coupling members 103 are disposed at plural positions in the peripheral direction on the outer edge portion of the hub 101. The central portion 110 of the hub 101 is coupled to the coupling portions 112 by plural arm portions 113a, 113b, 113c, and 113d, and the plural arm portions 113a, 113b, 113c, and 113d are inclined in one peripheral direction with respect to the radial direction.

In this brake disk 100A, the hub 101 and the braking member 102 have the coupling portions 112, 201 disposed therein respectively at five positions arranged at equal intervals in the peripheral direction. In the hub 101, plural arm portions 113a, 113b, 113c, and 113d extend from the coupling portions 112. The arm portions 113a, 113b, 113c, and 113d extend from both sides in the peripheral direction of the coupling portions 112, respectively. That is, the arm portions 113a, 113b are disposed forward in the rotational direction t of the coupling portions 112, respectively, and the arm portions 113c, 113d are disposed rearward in the rotational direction t of the coupling portion 112, respectively. The directions E1 to E4 in which the arm portions 113a, 113b, 113c, and 113d extend are inclined in one peripheral direction with respect to the radial directions D1 to D4, respectively.

According to this brake disk 100A, the hub 101 and the braking member 102 are coupled to each other while keeping the gap S, so that the hub 101 less undergoes the effect of thermal strain produced in the braking member 102 at the time of braking. In addition, the central portion 110 of the hub 101 and the coupling portion 112 are coupled to each other by the plural arm portions 113a, 113b, 113c, and 113d inclined in the one rotational direction with respect to the radial direction. For this reason, vibration caused by the braking member 102 or its surroundings at the time of braking can be reduced. Moreover, in this embodiment, the number of the arm portions 113a, 113b, 113c, and 113d extending from the respective coupling portions 112 is large, so that the forces applied to the respective arm portions 113a, 113b, 113c, and 113d by the coupling portions 112 at the time of braking can be distributed by that much. Further, in this embodiment, the central portion 110 of the hub 101 has fixing portions 111 interposed between the arm portions 113a, 113d disposed adjacently to each other in tandem in the peripheral direction, of the arm portions extending from the different coupling portions 112 disposed adjacently to each other in tandem in the peripheral direction, the fixing portions 111 fixing the brake disk to the other member. For this reason, the force applied to the fixing portion 111 can be distributed to the different coupling portions 112 disposed adjacently to each other in tandem in the peripheral direction. In this manner, in the brake disk 100A, the number of the coupling portions 112 and the number of the arm portions 113a, 113b, 113c, and 113d may be changed.

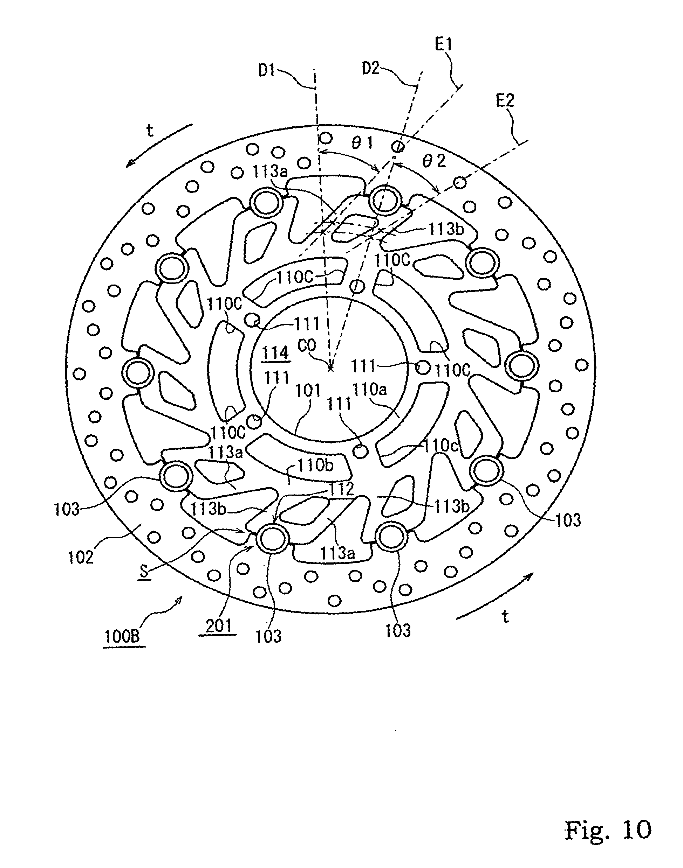

Further, a brake disk 100B according to another embodiment of the present invention, as shown in Fig. 10, includes the hub 101, the ring-shaped braking member 102 arranged outside the hub 101 via the gap S, and the coupling members 103 for coupling the hub 101 to the braking member 102 while keeping the gap S. The coupling portions 112 coupled to the braking member 102 by the coupling portions 103 are disposed at plural positions in the peripheral direction on the outer edge portion of the hub 101. The central portion 110 of the hub 101 and the coupling portions 112 are coupled to each other by plural arm portions 113a, 113b, and the plural arm portions 113a, 113b are inclined in one peripheral direction with respect to the radial direction. That is, the directions E1, E2 in which the respective arm portions 113a, 113b extend, as shown in Fig. 10, are inclined in the one peripheral direction with respect to the radial directions D1, D2. Moreover, in this embodiment, the arm portions 113a, 113b extend from both sides in the peripheral direction of the coupling portions 112, respectively. That is, the arm portions 113a are disposed forward in the rotational direction t of the coupling portions 112, respectively, whereas the arm portions 113b are disposed rearward in the rotational direction t of the coupling portions 112, respectively.

In this disk brake 100B, the central portion 110 of the hub 101 has an inside ring-shaped portion 110a and an outside ring-shaped portion 110b, and the inside ring-shaped portion 110a and the outside ring-shaped portion 110b are coupled to each other by bridge portions 110c extending in the radial direction. Plural arm portions 113a, 113b for coupling the central portion 110 of the hub 101 to the coupling portions 112 are coupled to the outside ring-shaped portion 110b of the central portion 110.

Moreover, the fixing portions 111 for fixing the brake disk 100 to the other member (wheel 11) are disposed in the central portion 110 of the hub 101. In this embodiment, the bridge portions 110c for coupling the inside ring-shaped portion 110a to the outside ring-shaped portion 110b are interposed between the arm portions 113a, 113b extending from the different coupling portions 112 disposed adjacently to each other in tandem in the peripheral direction. The fixing portions 111 are disposed in the portions in which the bridge portions 110c cross the inside ring-shaped portion 110a. In this manner, the central portion 110 of the hub 101 has the fixing portions 111 interposed between the arm portions 113a, 113b disposed adjacently to each other in tandem in the peripheral direction, of the arm portions extending from the different coupling portions 112 disposed adjacently to each other in tandem in the peripheral direction, the fixing portions 111 fixing the brake disk 100 to the other member. For this reason, the force applied to the fixing portions 111 can be distributed to the different coupling portions 112 disposed adjacently to each other in tandem in the peripheral direction. With this, the pulling force and the bending force applied to each of the arm portions 113a, 113b can be made more uniform, and hence vibration caused by the braking mechanism or its surroundings can be further reduced. Moreover, in this embodiment, the fixing portions 111 are disposed at positions in which the bridge portions 110c cross the inside ring-shaped portion 110a, and the portions around the fixing portions 111 are wide in the width of the hub 101. For this reason, stress concentration can be relieved around the fixing portions 111. Further, in this embodiment, the central portion 110 of the hub 101 has the inside ring-shape portion 110a and the outside ring-shape portion 110b, and the inside ring-shape portion 110a and the outside ring-shape portion 110b are coupled to each other by the bridge portions 110c extending in the radial direction. In this case, the fixing portions 111 for fixing the brake disk to the other member can be disposed further inside while reducing the weight of the hub 101.

Up to this point, various brake disks according to one embodiment of the present invention have been described, but the brake disk according to the present invention is not limited to the above-mentioned embodiments.

In the above-mentioned embodiments, as shown in Fig. 11, the brake disk 100 is fixed to the motorcycle 10. The brake disk according to the present invention can be applied not only to the motorcycle but also to the other vehicles. For example, the brake disk according to the present invention can be applied to a so-called straddle-type vehicle (such as snowmobile, four-wheeled buggy (ATV: All Terrain Vehicle)) in addition to the motorcycle. Moreover, here, the motorcycle means a motorcycle and includes a motorized bicycle (motorbike) and a scooter, and specifically means a vehicle capable of turning with a vehicle body inclined. Here, in this specification, for the sake of convenience, even if a vehicle has at least one of the front wheel and the rear wheel provided with two wheels or more, that is, has three wheels or four wheels simply in the number of tires, the vehicle is included in the "motorcycle".

### Description of the Reference Numerals 11- wheel

12- axle
21- braking mechanism
22- brake lever
23- brake shoe
100, 100A, 100B- brake disk
101- hub
102- braking member
103- coupling member
110- central portion
111- fixing portion
112- coupling portion of hub side
113a to 113d- arm portion
114- opening
201- coupling portion of baking member side
CO- center of hub
D1 to D4- radial direction
E1 to E4- direction in which arm portion extends
P0- force applied to coupling portion of hub side
P0a, P0b- force in tangential direction applied to arm portion
P1a, P1b- pulling force applied to arm portion
P2a, P2b- bending force applied to arm portion
S- gap between hub and braking member
t- rotational direction when vehicle travels forward

## Claims

1. A brake disk (100) comprising:
a hub (101);
a ring-shaped braking member (102) arranged outside the hub via a gap (5); and
a plurality of coupling members (103) for coupling the hub to the braking member while keeping the gap,
wherein the hub includes:
a plurality of coupling portions (112) that are disposed at a plurality of positions in a peripheral direction of an outer edge portion of the hub and that are coupled to the braking member by the plurality of coupling members;
a central portion (110) disposed inside in a radial direction of the plurality of coupling portions; and
a plurality of arm portions (113a, b) for coupling the plurality of coupling portions to the central portion, **characterised in that**
the arm portions (113a, b) are inclined in the same peripheral direction with respect to the radial direction.

2. The brake disk as claimed in claim 1,
wherein the plurality of coupling portions are independent of each other at the plural positions in the peripheral direction of the hub.

3. The brake disk as claimed in claim 1,
wherein the plurality of arm portions are arranged on both sides in the peripheral direction of the coupling portion across the coupling member, respectively.

4. The brake disk as claimed in any one of the preceding claims,
wherein the central portion of the hub has a plurality of fixing portions (111) each of which fixes the brake disk to other member and which is interposed between the arm portions disposed adjacently to each other in tandem in the peripheral direction, of the arm portions extending from the different coupling portions disposed adjacently to each other in tandem in the peripheral direction.

5. The brake disk as claimed in any one of the preceding claims,
wherein the plurality of coupling portions are disposed at equal intervals in the peripheral direction.

6. The brake disk as claimed in any one of the preceding claims,
wherein the plurality of arm portions are disposed at equal intervals in the peripheral direction.

7. The brake disk as claimed in any one of the preceding claims,
wherein the plurality of fixing portions are disposed at equal intervals in the peripheral direction.

8. A vehicle provided with the brake disk as claimed in any one of claims 1 to 7.

## Patentansprüche

1. Eine Bremsscheibe (100), die folgende Merkmale aufweist:
eine Nabe (101);
ein ringförmiges Bremsbauglied (110), das über einen Zwischenraum (S) außerhalb der Nabe angeordnet ist; und
eine Mehrzahl von Kopplungsbaugliedern (103) zum Koppeln der Nabe mit dem Bremsbauglied unter Beibehaltung des Zwischenraums,
wobei die Nabe folgende Merkmale umfasst:
eine Mehrzahl von Kopplungsabschnitten (112), die an einer Mehrzahl von Positionen in einer Umfangsrichtung eines Außenrandabschnitts der Nabe angeordnet sind und die mittels der Mehrzahl von Kopplungsbaugliedern mit dem Bremsbauglied gekoppelt sind;
einen mittleren Abschnitt (110), der innerhalb einer radialen Richtung der Mehrzahl von Kopplungsabschnitten angeordnet ist; und
eine Mehrzahl von Armabschnitten (113a, b) zum Koppeln der Mehrzahl von Kopplungsabschnitten mit dem mittleren Abschnitt, **dadurch gekennzeichnet, dass**
die Armabschnitte (113a, b) in derselben Umfangsrichtung bezüglich der radialen Richtung geneigt sind.

2. Die Bremsscheibe gemäß Anspruch 1,
bei der die Mehrzahl von Kopplungsabschnitten an den mehreren Positionen in der Umfangsrichtung der Nabe voneinander unabhängig sind.

3. Die Bremsscheibe gemäß Anspruch 1,
bei der die Mehrzahl von Armabschnitten auf beiden Seiten in der Umfangsrichtung des Kopplungsabschnitts über das Kopplungsbauglied hinweg angeordnet sind.

4. Die Bremsscheibe gemäß einem der vorhergehenden Ansprüche, bei der der mittlere Abschnitt der Nabe eine Mehrzahl von Befestigungsabschnitten (111) aufweist, von denen jeder die Bremsscheibe an einem anderen Bauglied befestigt und von denen jeder zwischen den Armabschnitten angeordnet ist, die in der Umfangsrichtung hintereinander und zueinander benachbart angeordnet sind, der Armabschnitte, die sich von den verschiedenen Kopplungsabschnitten, die in der Umfangsrichtung hintereinander und zueinander benachbart angeordnet sind, erstrecken.

5. Die Bremsscheibe gemäß einem der vorhergehenden Ansprüche, bei der die Mehrzahl von Kopplungsabschnitten in der Umfangsrichtung in gleichen Abständen angeordnet sind.

6. Die Bremsscheibe gemäß einem der vorhergehenden Ansprüche, bei der die Mehrzahl von Armabschnitten in der Umfangsrichtung in gleichen Abständen angeordnet sind.

7. Die Bremsscheibe gemäß einem der vorhergehenden Ansprüche, bei der die Mehrzahl von Befestigungsabschnitten in der Umfangsrichtung in gleichen Abständen angeordnet sind.

8. Ein Fahrzeug, das mit der Bremsschreibe gemäß einem der Ansprüche 1 bis 7 versehen ist.

## Revendications

1. Disque de frein (100), comprenant
un moyeu (101);
un élément de freinage torique (102) logé à l'extérieur du moyeu par l'intermédiaire d'un interstice (S); et
une pluralité d'éléments de couplage (103) destinés à coupler le moyeu à l'élément de freinage tout en maintenant l'interstice,
dans lequel le moyeu comprend:
une pluralité de parties de couplage (112) qui sont disposées à une pluralité de positions dans une direction périphérique d'une partie de bord extérieur du moyeu et qui sont couplées à l'élément de freinage par la pluralité d'éléments de couplage;
une partie centrale (110) disposée à l'intérieur dans une direction radiale de la pluralité de parties de couplage; et
une pluralité de parties de bras (113a, b) pour coupler la pluralité de parties de couplage à la partie centrale,
**caractérisé par le fait que**
les parties de bras (113a, b) sont inclinées dans la même direction périphérique par rapport à la direction radiale.

2. Disque de frein selon la revendication 1,
dans lequel la pluralité de parties de couplage sont indépendantes l'une de l'autre à la pluralité de positions dans la direction périphérique du moyeu.

3. Disque de frein selon la revendication 1,
dans lequel la pluralité de parties de bras sont disposées des deux côtés dans la direction périphérique de la partie de couplage sur tout l'élément de couplage, respectivement.

4. Disque de frein selon l'une quelconque des revendications précédentes,
dans lequel la partie centrale du moyeu présente une pluralité de parties de fixation (111) qui fixent, chacune, le disque de frein à l'autre élément et qui est interposée entre les parties de bras disposées de manière adjacente l'une à l'autre en tandem dans la direction périphérique, des parties de bras s'étendant des différentes parties de couplage disposées de manière adjacente l'une à l'autre en tandem dans la direction périphérique.

5. Disque de frein selon l'une quelconque des revendications précédentes,
dans lequel la pluralité de parties de couplage sont disposées à des intervalles identiques dans la direction périphérique.

6. Disque de frein selon l'une quelconque des revendications précédentes,
dans lequel la pluralité de parties de bras sont disposées à des intervalles identiques dans la direction périphérique.

7. Disque de frein selon l'une quelconque des revendications précédentes,
dans lequel la pluralité de parties de fixation sont disposées à des intervalles identiques dans la direction périphérique.

8. Véhicule pourvu du disque de frein selon l'une quelconque des revendications 1 à 7.
